# EUROPÄISCHE PATENTSCHRIFT

(11) **EP 1 129 357 B1**
(45) Veröffentlichungstag und Bekanntmachung des Hinweises auf die Patenterteilung: **11.01.2006**
(21) Anmeldenummer: 99971920.6
(22) Anmeldetag: 04.11.1999
(51) Int. Cl.: G01P 3/487, F16H 59/36

(54) **EINRICHTUNG ZUR BERÜHRUNGSLOSEN MESSUNG DER DREHZAHL EINES BAUTEILS**
DEVICE FOR THE CONTACTLESS MEASUREMENT OF THE ROTATIONAL SPEED OF A PART
DISPOSITIF POUR LA MESURE SANS CONTACT DE LA VITESSE DE ROTATION D'UN COMPOSANT

(30) Priorität: 10.11.1998 DE 19851760
(43) Veröffentlichungstag der Anmeldung: 05.09.2001
(73) Patentinhaber: ZF FRIEDRICHSHAFEN AG, 88046 Friedrichshafen (DE)
(72) Erfinder: HAUPT, Josef, D-88069 Tettnang (DE); MARTIN, Hans-Joachim, D-88079 Kressbronn (DE); MITTELBERGER, Jürgen, D-88138 Wei ensberg (DE)
(86) Internationale Anmeldenummer: PCT/EP1999/008416
(87) Internationale Veröffentlichungsnummer: WO 2000/028333

(56) Entgegenhaltungen:
- EP-A- 0 443 937
- EP-A- 0 462 435
- GB-A- 2 113 844
- US-A- 4 586 401
- US-A- 5 336 996
- US-H- H 964

## Beschreibung

Die vorliegende Erfindung betrifft eine Vorrichtung nach dem Oberbegriff des Anspruchs 1.

Die Vorrichtung eignet sich insbesondere zur Messung der Drehzahl eines mit der rotierenden Turbine eines Automatgetriebes verbundenen Zylinders, der innerhalb eines ebenfalls rotierenden konzentrischen Topfes angeordnet ist, wobei beide Bauteile von einem Gehäuse umgeben sind und wobei die Einrichtung eine ein Magnetfeld erzeugende Anordnung und einen Magnetfelddetektor aufweist.

Bauteile eines Automatgetriebes wie mit der Turbine verbundene Zylinder, die demzufolge mit der Turbinendrehzahl rotieren, befinden sich oftmals innerhalb von anderen Bauteilen, die entweder stillstehen oder die mit einer zweiten von der Turbinendrehzahl unabhängigen Drehzahl rotieren.

Aus der DE-A 36 20 884 ist eine Vorrichtung zur Erfassung von Drehzahl und Drehrichtung eines sich drehenden Teils bekannt, wobei das sich drehende Teil beispielsweise eine Welle oder eine Zahnstange ist, deren Zähne jeweils in ferromagnetischem Material ausgeformt sind. Ein Feldplatten-Differentialfühler liefert Eingangsspannungen für Verstärker, denen Bandpässe und Komparatoren nachgeschaltet sind. Damit können Zahnreihen verwendet werden, deren Zahnabstände und Zahnlücken identisch sind und wobei sowohl die Bewegungsgeschwindigkeit als auch die Bewegungsrichtung eindeutig gemessen werden kann. Mit dieser bekannten Vorrichtung ist es jedoch nicht möglich, die Drehzahl bzw. Drehrichtung eines sich drehenden Bauteils zu messen, das von einem zweiten sich drehenden oder stehenden Bauteil umgeben ist, wobei das Messignal dieses zweite Bauteil durchsetzen muss.

Die EP-B 462 435 betrifft eine Anordnung zur Erfassung der Drehzahl eines im Betrieb rotierenden Bauteils, das in Umfangsrichtung wenigstens eine Unebenheit aufweist und mit einer die Bewegung der Unebenheit erfassenden Drehzahlsensoreinrichtung, wobei ein ein Magnetfeld erzeugendes Mittel und ein Magnetfelddetektor zu einer Baueinheit zusammengefasst sind und zwischen der Drehzahlsensoreinrichtung und dem rotierenden Bauteil einer Wandung vorgesehen ist, sodass die Drehzahl des rotierenden Bauteils durch die Wandung hindurch erfasst wird. Der Magnetfelderzeuger ist hierbei ein Permanentmagnet und der Detektor ein nach dem Feldplattenprinzip arbeitender Magnetfelddetektor. Der Drehzahlsensor befindet sich in einer Bohrung eines Gehäuses eines Kraftfahrzeug-Automatikgetriebes, das eine aussenverzahnte erste Kupplungsglocke aufweist sowie eine zweite Kupplungsglocke, die zwischen dem Drehzahlsensor und der ersten Kupplungsglocke angeordnet ist. Der Magnetfelddetektor ist in einer durch seinen kürzesten Abstand zur ersten Kupplungsglocke bestimmten Richtung besonders empflindlich. Auf diese Weise ist es möglich, durch die sich drehende zweite Kupplungsglocke hindurch die von der ersten Kupplungsglocke bewirkte Veränderung des vom Permanentmagneten erzeugten Magnetfeldes zu erfassen. Der Grundwerkstoff der zweiten Kupplungsglocke ist bei dieser bekannten Anordnung zumindest abschnittsweise in einem dem Magnetfelddetektor gegenüber liegenden Bereich in Umfangsrichtung entmagnetisiert oder aber mit einer ein gerichtetes Magnetfeld erzeugenden Magnetisierung versehen. Der Magnetfelderzeuger sitzt hierbei auf dem rotierenden inneren Bauteil, während der Magnetfelddetektor innerhalb des Gehäuses angeordnet ist.

Aufgabe der vorliegenden Erfindung ist es, auf besonders einfache und zuverlässige Weise und ohne zusätzlichen Raumbedarf die Drehzahl eines rotierenden Bauteils zu messen, das innerhalb eines weiteren Bauteils angeordnet ist, das entweder stillsteht oder mit einer zweiten, von der ersten Drehzahl unabhängigen Drehzahl rotiert, wobei das erste und das zweite Bauteil konzentrisch zueinander angeordnet sind.

Ausgehend von einer Vorrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den abhängigen Ansprüchen beschrieben.

Das erfindungsgemäße Prinzip besteht also darin, als berührungslos arbeitenden magnetfeldempfindlichen Sensor einen Hallsensor vorzusehen, mit dem die Drehzahl eines rotierenden Zylinders mit integriertem Polrad durch einen ebenfalls rotierenden konzentrisch dazu angeordneten Topf aus einem nicht magnetisierbaren Material erfaßt wird. Hierbei kann auch eine Drehzahl "Null" des Zylinders erfaßt werden. Da das Polrad vollständig in das erste rotierende Bauteil, d. h. den rotierenden Zylinder, integriert ist und da der Hallsensor vollständig in die Wand des Gehäuses integriert ist, das die beiden Bauteile umgibt, wird kein zusätzlicher Raumbedarf benötigt.

Die erfindungsgemäße Vorrichtung eignet sich insbesondere für Automatgetriebe von Kraftfahrzeugen, bei denen das erste Bauteil ein Zylinder ist, der mit der Turbinenwelle fest verbunden ist und dessen Drehzahl zu Regelungszwecken zu messen ist.

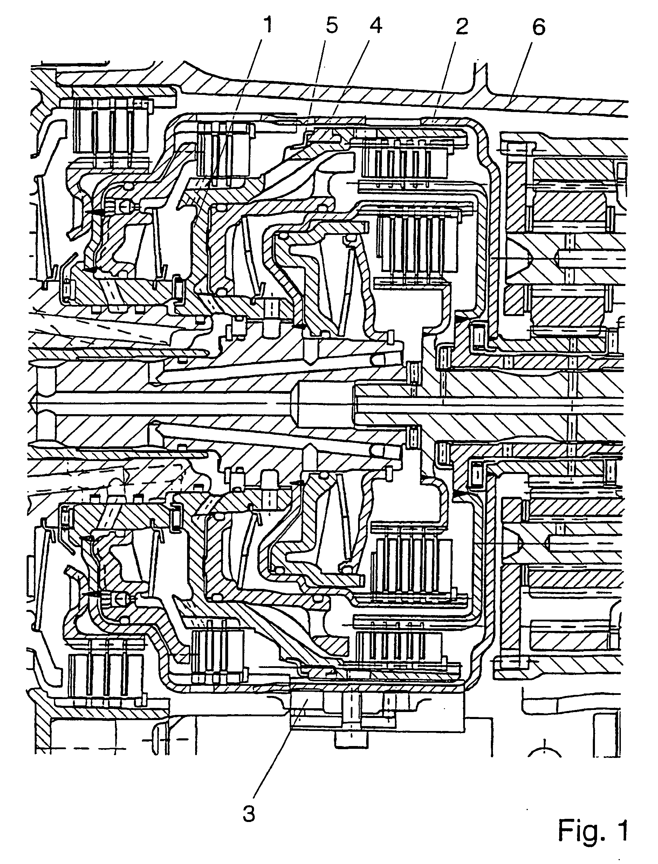

Im folgenden wird die Erfindung anhand der Zeichnung näher erläutert, die einen Teilschnitt durch ein mit der erfindungsgemäßen Einrichtung versehenes herkömmliches Automatgetriebe darstellt.

Da derartige Automatgetriebe hinreichend bekannt sind, sind nur die für das Verständnis der Erfindung notwendigen Bauteile mit Bezugszeichen versehen.

Bei diesem Getriebe, dessen Gehäuse mit 6 bezeichnet ist, ist ein mit der Turbinenwelle fest verbundenes erstes Bauteil in Form eines Zylinders 1 vorgesehen, dessen Drehzahl berührungslos gemessen werden soll. Das Bauteil 1 ist von einem zweiten Bauteil 2 in Form eines Topfes konzentrisch umgeben, wobei dieses zweite Bauteil 2 entweder stillsteht oder in einer von der Drehzahl des ersten Bauteils 1 unabhängigen zweiten Drehzahl rotiert.

Zur Messung der Drehzahl des Zylinders 1 durch den Topf 2 hindurch ist erfindungsgemäß ein Magnetring 4 vorgesehen, der vollständig in den Zylinder 1 integriert ist, wobei der Magnetring die Form eines Polrades aufweist, das vorzugsweise ein kunststoffgebundener ringförmiger Hartferritt ist mit einer radialen Magnetisierung. Ein Polrad mit 18 Polpaaren hat sich als besonders vorteilhaft herausgestellt.

Das Polrad 4 weist einen im wesentlichen T-förmigen Querschnitt auf, wobei der Querbalken des T in eine entsprechende Aussparung im Zylinder 1 eingreift und zwar derart, daß der Längsbalken des T sich in Richtung des Gehäuses 6 bis zur Oberfläche des Zylinders 1 erstreckt. Das Polrad 4 wird mittels eines Halteringes 5 aus einem nicht magnetisierbarem Werkstoff z. B. eines austenitischen Werkstoffs oder Aluminium nach dem Einsetzen in die Aussparung des Zylinders 1 gehalten.

In einer Aussparung im Gehäuse 6 ist ein Magnetfelddetektor 3 in Form eines Hallsensors vorgesehen, wobei der Hallsensor vorzugsweise ein bipolar arbeitender Hallsensor-IC ist, der ein digitales Ausgangssignal abgibt. Zwischen der Außenseite des mit dem Polrad 4 versehenen Zylinders 1 und dem Hallsensor 3 befindet sich das zweite Bauteil 2 in Form eines Topfes, wobei dieses Bauteil aus einem nicht magnetisierbarem Material besteht, vorzugsweise aus einem austenitischem Werkstoff, so daß die Drehzahl des rotierenden Zylinders 1 vom Hallsensor 3 durch das zweite Bauteil 2 hindurch gemessen werden kann.

Bei einem Arbeitsabstand zwischen Polrad 4 und Sensor 3 von z. B. 6 mm und einem Polrad 4 mit 18 Polpaaren erhält man eine maximale magnetische Flußdichte in 6 mm Abstand von +/-12 mT.

Eine derartige erfindungsgemäß aufgebaute Vorrichtung eignet sich für einen Temperaturbereich von -40 bis +150°C und stellt die Drehzahl des rotierenden ersten Bauteils 1, d. h. des Zylinders, mit hoher Genauigkeit fest. Ein Polrad in Form eines kunststoffgebundenen ringförmigen Hartferrittmagneten mit 18 Polpaaren führt zu ausreichend genau plazierbaren Magnetfeldern hinsichtlich Winkel- und Radialversatz bei minimalen Fertigungsaufwand und bei hoher Montagesicherheit, sodass ein derartiges Polrad für die Grosserienfertigung geeignet ist.

Das Polrad mit dem T-förmigen Querschnitt ermöglicht die beidseitige Führung und Abstützung in der Aussparung des Zylinders und widersteht damit den auftretenden hohen Fliehkräften im Betrieb. Die Montage des Polrades ist einfach und prozessicher; es ist weder ein Einstellvorgang, noch ein Einmessvorgang erforderlich.

In einer Ausgestaltung ist der Magnetring mit dem Haltering verklebt.

Die Halterung, mit der das Polrad im Zylinder gehalten wird, kann mit einem einfachen Schnappverschluss versehen sein, wodurch eine optimale Abstützung auch des Halteringes und damit eine axiale Sicherung hinsichtlich der auftretenden Fliehkraft erzielt wird.

In einer weiteren Ausgestaltung ist der Haltering mit dem Zylinder verstemmt, um Spielfreiheit zu gewährleisten. Dies ist erforderlich, wenn hohe Motorschwingungen auftreten.

### Bezuszeichen

- 1: Zylinder
- 2: Topf
- 3: Hallsensor
- 4: Polrad
- 5: Halterung
- 6: Gehäuse

## Patentansprüche

1. Vorrichtung mit einem im Betrieb rotierenden Zylinder (1), der insbesondere mit einer rotierenden Turbine eines Automatgetriebes verbunden ist, mit einem konzentrischen Topf (2), innerhalb dessen der Zylinder (1) angeordnet ist, wobei der Topf (2) entweder nicht rotiert oder mit einer Drehzahl rotiert, die unabhängig von der Drehzahl des Zylinders (1) ist, und wobei der Topf (2) aus einem nichtmagnetisierbaren Werkstoff besteht, mit einem den Topf (2) und den Zylinder (1) umgebenden Gehäuse (6), und mit einer ein Magnetfeld erzeugenden Anordnung und einem Magnetfelddetektor zur berührungslosen Messung der Drehzahl des Zylinders (1), **dadurch gekennzeichnet, daß** die das Magnetfeld erzeugende Anordnung ein in den Zylinder (1) integrierter Magnetring (4) ist, daß der Magnetfelddetektor ein Hallgeber (5) ist, der in einer Aussparung in der Wand des Gehäuses (6) ortsfest angeordnet ist, wobei der Magnetring (4) die Form eines Polrades aufweist mit im wesentlichen T-förmigem Querschnitt, wobei der Querbalken des T in eine entsprechende Aussparung im Zylinder (1) eingreift und der Längsbalken des T sich in Richtung Gehäuse (6) bis zur Oberfläche des Zylinders (1) erstreckt.

2. Vorrichtung nach Anspruch 1, **dadurch gekennzeichnet, daß** das Polrad (4) aus einem kunststoffgebundenen Hartferritt mit radialer Magnetisierung besteht.

3. Vorrichtung nach Anspruch 1 oder 2, **dadurch gekennzeichnet, daß** das Polrad (4) mittels eines Halteringes (5) aus nicht magnetisierbarem Werkstoff in radialer und axialer Richtung im Zylinder (1) fixiert ist.

## Claims

1. The invention relates to a device featuring a cylinder (1), which rotates during operation of the device and is connected to a rotating turbine of an automatic transmission, and featuring a concentric pot (2), within which the cylinder (1) is arranged, with the pot (2) either not rotating or rotating at a speed independent of that of the cylinder (1) and with the pot (2) consisting of a non-magnetizable material, and featuring a housing (6) enclosing the pot (2) and the cylinder (1), and featuring an arrangement producing a magnetic field, and featuring a magnetic-field sensor for contactless sensing of the speed of the cylinder (1), **characterized in that** the arrangement producing the magnetic field consists of a magnetic ring (4), which is integrated into the cylinder (1), that the magnetic-field sensor is a Hall sensor (5), which is immovably arranged in a recess of the wall of the housing (6), with the magnetic ring (4) having the shape of a magnet wheel with a largely T-shaped profile, with the horizontal of the T locking with a corresponding recess in the cylinder (1) and the vertical of the T extending towards the housing (6) and to the surface of the cylinder (1).

2. A device according to claim 1, **characterized in that** the magnetic ring (4) consists of a plastics-bonded hard ferrite with radial magnetization.

3. A device according to claim 1 or 2, **characterized in that** the magnetic ring (4) is fixed in the cylinder in radial and axial direction by means of a fixing ring (5) made of a non-magnetizable material.

## Revendications

1. Dispositif doté d'un vérin (1) tournant en service, qui est lié en particulier à une turbine tournante d'une boîte de vitesses automatique, et doté d'un tonneau (2) concentrique, dans lequel est disposé le vérin (1), sachant que le tonneau (2) ne tourne pas ou qu'il tourne avec une vitesse qui est indépendante de la vitesse du vérin (1), et sachant que le tonneau (2) est composé d'un matériau pas magnétisable, d'un carter (6) enveloppant le tonneau (2) et le vérin (1), et d'une structure créant un champ magnétique et d'un détecteur de champ magnétique pour la mesure sans contact de la vitesse du vérin (1),
**caractérisé en ce que** la structure créant le champ magnétique est une bague magnétique (4) intégrée au vérin, **en ce que** le détecteur de champ magnétique est un capteur Hall (5), qui est disposé de manière fixe dans un évidement dans la paroi du carter (6), sachant que la bague magnétique (4) a la forme d'un induit avec une section essentiellement en T, sachant que la traverse transversale du T engrène dans un évidement correspondant du vérin (1) et la traverse longitudinale du T s'étend jusqu'à la surface du vérin (1) dans le sens du carter (6).

2. Dispositif selon la revendication 1, **caractérisé en ce que** l'induit (4) est composé de ferrite dur à liant en matière plastique avec magnétisation radiale.

3. Dispositif selon la revendication 1 ou 2, **caractérisé en ce que** l'induit (4) est fixé au moyen d'une bague d'arrêt (5) d'un matériau non magnétisable et dans le sens radial et axial dans le vérin (1).
